# EUROPEAN PATENT SPECIFICATION

(11) **EP 3 018 884 B1**
(45) Date of publication and mention of the grant of the patent: **26.09.2018**
(21) Application number: 14819548.0
(22) Date of filing: 16.04.2014
(51) Int. Cl.: H04L 29/08, G06F 17/30, G06F 3/0484, H04L 29/06

(54) **MOBILE TERMINAL CROSS-BROWSER LOGIN METHOD AND DEVICE**
VERFAHREN UND VORRICHTUNG ZUR BROWSERÜBERGREIFENDEN ANMELDUNG FÜR MOBILES ENDGERÄT
PROCÉDÉ ET DISPOSITIF D'OUVERTURE DE SESSION À PLUSIEURS NAVIGATEURS POUR TERMINAL MOBILE

(30) Priority: 05.07.2013 CN 201310281386
(43) Date of publication of application: 11.05.2016
(73) Proprietor: Huizhou TCL Mobile Communication Co., Ltd., Huizhou, Guangdong 516006 (CN)
(72) Inventor: QIAN, Wen, Hui Zhou Guangdong 516006 (CN); QIAO, Hongwei, Hui Zhou Guangdong 516006 (CN)
(74) Representative: Brachmann, Roland W.
(86) International application number: PCT/CN2014/075454
(87) International publication number: WO 2015/000320

(56) References cited:
- CN-A- 102 591 916
- CN-A- 102 821 093
- CN-A- 102 970 284
- US-A1- 2012 210 413
- US-A1- 2013 124 309

## Description

The present invention relates to mobile terminal devices and in particular to a method and device of trans-browser login for a mobile terminal.

Along with the extensive use of mobile terminals, in particular 3G smart phones, mobile Internet has been developed rapidly. Functions originally used by subscribers on computers have been gradually transferred to cell phones, in particular the online surfing function of cell phones. As an entry to the mobile Internet, mobile browsers have increasingly powerful functions, such as high-speed online performance and powerful cores. However, one problem has not been solved for a long time, i.e. the issue of trans-browser login on cell phones. It is well known that when a subscriber logs in a website, all browsers have a Cookie to record the information such as a subscriber's ID, password, browsed webpages and time spent. When the subscriber visits the website again, the website server learns the relevant information by reading the Cookie and can perform corresponding actions, and the subscriber can log in directly without typing in the ID or password. However, each browser records the Cookie according to its own rules. When a subscriber's cell phone has multiple browsers, the subscriber name and password need to be typed in repeatedly when different browsers are used to visit the same website. The lack of universality in the recorded Cookies has resulted in great inconvenience to subscribers US 2012/0210413 discloses a method for facilitating single sign-on across multiple browsers such that user authentication at one browser allows signing in from other browsers.

US2013/0124309 discloses methods for providing targeted advertisements based on cookies stored in user devices.

Therefore, the prior art still needs to be improved and developed.
The technical problem that the present invention intends to solve is to, in light of the above drawback of the prior art, provide a method and device of trans-browser login for a mobile terminal. It is intended to solve the problem that currently when a mobile terminal logs in the same website by switching browsers, the subscriber name and password must be typed in again.

This problem is solved according to the features of the independent claims. Further embodiments result from the depending claims.

The present invention which is defined by the independent claims further embodiments are disclosed in the dependent claims, employs the following technical solution: A method of trans-browser login for a mobile terminal is provided comprising the following steps:
A. Creating a cookie folder in the memory module of the mobile terminal in advance;
B. Generating a corresponding cookie by correlating addresses of different websites with a subscriber's registration name and password corresponding to the websites, as well as the IMEI number of the mobile terminal, and storing the cookie in the cookie folder;
C. Sending the cookie to the server of a corresponding website, and the server of the website stores the IMEI number of the mobile terminal under the registration name corresponding to the subscriber;
D. Any browser of the mobile terminal receives the website inputted by the subscriber and searches if a cookie of the website exists in the cookie folder, if yes, send the cookie to the server of the website; if no, return to Step B;
E. The server of the website reads the IMEI number of the mobile terminal in the cookie, looks for the corresponding registration name according to the IMEI number of the mobile terminal, and returns to the browser a webpage when the registration name is used to log in the website.
According to an embodiment, Step E specifically comprises:
The server of the website reads the IMEI number of the mobile terminal in the cookie, looks for the corresponding registration name according to the IMEI number of the mobile terminal, and the server of the website verifies the cookie, if the verification fails, input registration name and password again; if the verification succeeds, return to the browser a webpage when the registration name is used to log in the website.

According to an embodiment, during verification, the server of the website verifies if the subscriber name corresponds to the password or if it has expired.

According to an embodiment, said Step B further comprises:
B1. Correlating to the IMSI number of the mobile subscriber and generating a corresponding cookie, and storing the cookie in the cookie folder.

According to an embodiment, said Step C further comprises:
C1. The server of the website stores the IMSI number of the mobile subscriber under the registration name corresponding to the subscriber.

According to an embodiment, said Step E further comprises:
E1. The server of the website reads the IMSI number of the mobile subscriber in the cookie, looks for the corresponding registration name according to the IMEI number of the mobile terminal and the IMSI number of the mobile subscriber, and returns to the browser a webpage when the registration name is used to log in the website.

A method of trans-browser login for a mobile terminal is provided, which comprises the following steps:
A. Creating a cookie folder in the memory module of the mobile terminal in advance;
B. Generating a corresponding cookie by correlating addresses of different websites with a subscriber's registration name and password corresponding to the websites, as well as the IMEI number of the mobile terminal, and storing the cookie in the cookie folder;
C. Sending the cookie to the server of a corresponding website, and the server of the website stores the IMEI number of the mobile terminal under the registration name corresponding to the subscriber;
D. Any browser of the mobile terminal receives the website inputted by the subscriber and searches if a cookie of the website exists in the cookie folder, if yes, send the cookie to the server of the website; if no, return to Step B;
E. The server of the website reads the IMEI number of the mobile terminal in the cookie, looks for the corresponding registration name according to the IMEI number of the mobile terminal, and returns to the browser a webpage when the registration name is used to log in the website;

Said Step B further comprises:
B1. Correlating addresses of different websites with the corresponding valid time of the subscriber on said websites and generating a corresponding cookie, and storing the cookie in the cookie folder.

According to an embodiment, Step E specifically comprises:
The server of the website reads the IMEI number of the mobile terminal in the cookie, looks for the corresponding registration name according to the IMEI number of the mobile terminal, and the server of the website verifies the cookie, if the verification fails, input registration name and password again; if the verification succeeds, return to the browser a webpage when the registration name is used to log in the website.

According to an embodiment, during verification, the server of the website verifies if the subscriber name corresponds to the password or if it has expired.

According to an embodiment, said Step B further comprises:
B1. Correlating to the IMSI number of the mobile subscriber and generating a corresponding cookie, and storing the cookie in the cookie folder.

According to an embodiment, said Step C further comprises:
C1. The server of the website stores the IMSI number of the mobile subscriber under the registration name corresponding to the subscriber.

According to an embodiment, said Step E further comprises:
E1. The server of the website reads the IMSI number of the mobile subscriber in the cookie, looks for the corresponding registration name according to the IMEI number of the mobile terminal and the IMSI number of the mobile subscriber, and returns to the browser a webpage when the registration name is used to log in the website.

A device of trans-browser login for a mobile terminal is provided, comprising:
- A cookie folder generation module for creating a cookie folder in the memory module of the mobile terminal;
- A cookie correlation and generation module for generating a corresponding cookie by correlating addresses of different websites with a subscriber's registration name and password corresponding to the websites, as well as the IMEI number of the mobile terminal;
- A website server module for receiving the cookie and storing the IMEI number of the mobile terminal under the registration name corresponding to the subscriber;
- A cookie searching module for searching if a cookie of the website inputted by the subscriber exists in the cookie folder;
- A cookie reading module for reading the IMEI number of the mobile terminal in the cookie, looking for the corresponding registration name according to the IMEI number of the mobile terminal, and returning to the browser a webpage when the registration name is used to log in the website.

According to an embodiment, said cookie correlation and generation module is further used for correlating to the IMSI number of a mobile subscriber and generating a corresponding cookie.

According to an embodiment, said website server module is further used for receiving the cookie and storing the IMSI number of the mobile subscriber under the registration name corresponding to the subscriber.

According to an embodiment, said cookie reading module is further used for reading the IMSI number of the mobile subscriber in the cookie, looking for the corresponding registration name according to the IMEI number of the mobile terminal and the IMSI number of the mobile subscriber, and returning to the browser a webpage when the registration name is used to log in the website.

The present invention provides a method and device of trans-browser login for a mobile terminal, which effectively solves the problem of the current mobile terminal that a website is logged in using one browser, and when the same website is to be logged in using other browsers, the subscriber name and password need to be inputted again. The method creates a cookie folder in the memory module of the mobile terminal in advance; generates a corresponding cookie by correlating addresses of different websites with a subscriber's registration name and password corresponding to the websites, as well as the IMEI number of the mobile terminal, and stores the cookie in the cookie folder; sends the cookie to the server of a corresponding website, and stores the IMEI number of the mobile terminal under the registration name corresponding to the subscriber in the server of the website; any browser of the mobile terminal receives the website inputted by the subscriber and searches if a cookie of the website exists in the cookie folder, if yes, send the cookie to the server of the website; if no, generate a corresponding cookie through correlation again; the server of the website reads the IMEI number of the mobile terminal in the cookie, looks for the corresponding registration name according to the IMEI number of the mobile terminal, and returns to the browser a webpage when the registration name is used to log in the website, thereby solving the problem of repeated login among multiple browsers on one mobile terminal. Only one login is needed on the mobile terminal, and as long as the same mobile terminal is used subsequently for login, it is unnecessary to input subscriber name and password again, which results in great convenience for subscribers.

The aforementioned characteristics, features and advantages of the invention as well as the way they are achieved will be further illustrated in connection with the following examples and considerations as discussed in view of the figures.
- Fig.1: is a flow chart of a first preferred embodiment of the method of transbrowser login for a mobile terminal according to the present invention.
- Fig.2: is a structural block diagram of a second preferred embodiment of the method of trans-browser login for a mobile terminal according to the present invention.
- Fig.3: is a structural block diagram of the device of trans-browser login for a mobile terminal according to the present invention.

The present invention provides a method and device of trans-browser login for a mobile terminal. To make the object, technical solution and effect of the present invention clearer and more specific, the present invention will be further described in detail below with reference to the accompanying drawings and embodiments. It should be understood that the specific embodiments herein are only used to describe the present invention, rather than to limit the present invention.

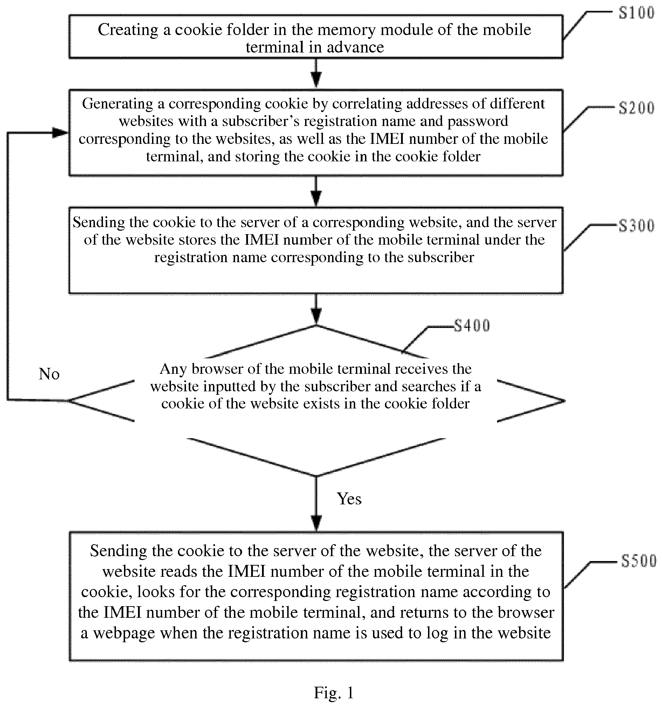

Please refer to Fig.1, and Fig.1 is a flow chart of a first preferred embodiment of the method of trans-browser login for a mobile terminal according to the present invention, comprising the following steps:
Step S100. Creating a cookie folder in the memory module of the mobile terminal in advance;
Step S200. Generating a corresponding cookie by correlating addresses of different websites with a subscriber's registration name and password corresponding to the websites, as well as the IMEI number of the mobile terminal, and storing the cookie in the cookie folder;
Step S300. Sending the cookie to the server of a corresponding website, and the server of the website stores the IMEI number of the mobile terminal under the registration name corresponding to the subscriber;
Step S400. Any browser of the mobile terminal receives the website inputted by the subscriber and searches if a cookie of the website exists in the cookie folder, if yes, send the cookie to the server of the website; if no, return to Step S200;
Step S500. The server of the website reads the IMEI number of the mobile terminal in the cookie, looks for the corresponding registration name according to the IMEI number of the mobile terminal, and returns to the browser a webpage when the registration name is used to log in the website.

The mobile terminal is typically a cell phone or tablet. The above steps will be described below in detail with reference to specific embodiments with cell phone as an example.

First, the principle of cookie will be described briefly. Cookie is a set of information stored temporarily by a website server on a cell phone, and the website server uses the cookie to identify subscribers. When a subscriber opens up a browser to browse the website, the web server will first send some information, such as subscriber ID, browsed webpages and time spent, onto the subscriber's cell phone, and the Cookie records texts typed or some selections made by the subscriber on the website. When the subscriber opens up the same website next time, the web server will first check if there is Cookie information that it left last time, if yes, it will judge the subscriber according to the content in the Cookie and display corresponding contents. Generally speaking, Cookie is generated by a server and sent to a cell phone browser, the cell phone browser will save the Cookie into a text file under a directory, typically in the manner of distributed key-value storage, and send the Cookie to the server when requesting the same website next time. A Cookie has the following three properties, first, when a browser creates a Cookie, every request for the website will carry this Cookie in the Header (header, i.e. PHP header, which is a character string sent out before a server transmits HTML information to a browser in the HTTP protocol); however, the Cookie will never be sent for requests for other websites. Moreover, the browser will keep on sending like this until the Cookie expires. Second, if multiple browsers are installed in one cell phone, each browser will have an independent space to store cookies. As a cookie not only can identify subscribers, but also may contain information of the cell phone and browser, one subscriber will obtain different cookie information when using different browsers to log in or different cell phones to log in. Third, Cookie is always stored at a client, i.e. cell phone, which may be divided into memory Cookie and hard disk Cookie according to the storage position at the client. The memory Cookie is maintained by a browser and stored in the memory, which disappears when the browser is closed. Its existence is temporary. The hard disk Cookie is stored on the hard disk and has an expiration period. The hard disk Cookie will not be deleted unless it is manually cleaned by a subscriber or it expires. Its existence is long term.

Based on the above principle of cookie, the present invention employs hard disk cookie and creates a cookie folder in the ROM partition of a cell phone in advance, and the cookie folder is used to store cookie information of all browsers. The cookie is generated by correlating addresses of different websites with a subscriber's registration name and password corresponding to the websites, as well as the IMEI number of the mobile terminal. IMEI is an abbreviation of International Mobile Equipment Identity, which is a 15-digit "electronic string number", which has a one-to-one correspondence to every cell phone and is unique in the whole world. Every cell phone will be assigned a globally unique number when it is assembled, and this number is recorded by manufacturers from production to delivery. Therefore, cookies generated based on the correlated IMEI number has the property of unique confirmation. When a cell phone sends the subscriber information via a browser to a website server, it sends these correlated cookies to the website server at the same time, and the website server will store the IMEI number of the mobile terminal under the registration name corresponding to the subscriber.

When the subscriber uses any browser of the cell phone to log in a website, the cell phone first searches in the cookie folder if a cookie of the website exists, if yes, it sends the cookie to the server of the website; if no, return to Step S200, i.e. re-generates a cookie corresponding to the website in the cookie folder. When the server of the website receives the cookie correlated to the IMEI number of the cell phone, it reads the IMEI number of the cell phone in the cookie, looks for the corresponding registration name according to the IMEI number of the cell phone, and returns to the browser a webpage when the registration name is used to log in the website, such that the subscriber does not need to input subscriber name and password again to log in the website.

Moreover, Step S200 further comprises: S210. Generating a corresponding cookie by correlating addresses of different websites with a subscriber's registration name, password and valid time corresponding to the websites, as well as the IMEI number of the mobile terminal, and storing the cookie in the cookie folder. Specifically, since a cookie has certain period of validity, for example three days, one month or one year, the addition of a time property into the cookie generated through correlation better meets the subscriber's need.

Moreover, Step S500 further comprises: S510. The server of the website reads the IMEI number of the mobile terminal in the cookie, looks for the corresponding registration name according to the IMEI number of the mobile terminal, and the server of the website verifies the cookie, if the verification fails, input registration name and password again; if the verification succeeds, return to the browser a webpage when the registration name is used to log in the website. Specifically, when the website receives the cookie sent from the mobile terminal, it will verify the cookie, e.g. if the subscriber name corresponds to the password, if it has expired, etc., if the verification fails, type in the subscriber name and password again, and then enter Step S200 and generate a corresponding cookie through correlation again; if the verification succeeds, return to the browser a webpage when the website is logged in.

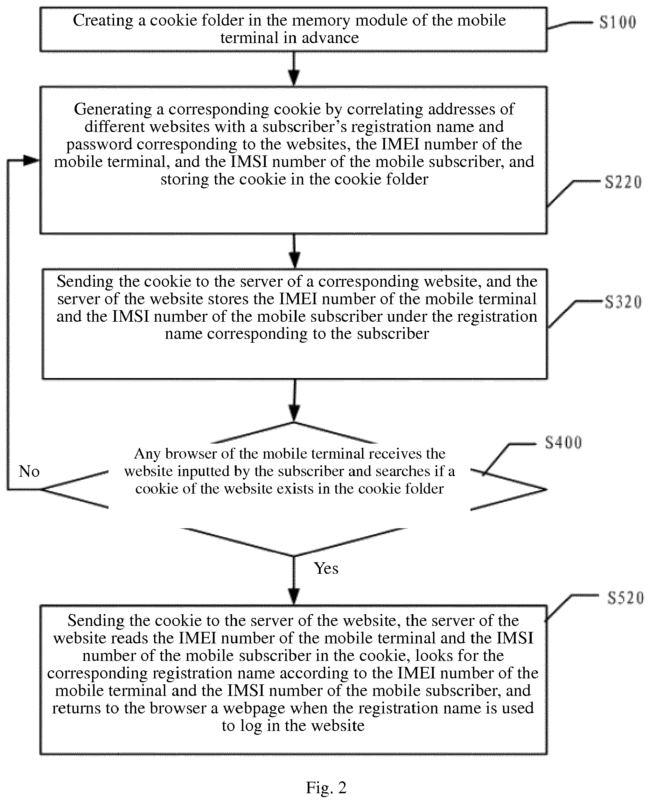

Since the subscriber uses the mobile terminal in the first preferred embodiment, the subscriber can log in any webpage that has been logged in through any browser with no need to type in the subscriber name and password again, even when the subscriber changes the SIM card. To improve the cookie security, furthermore, please refer to Fig.2, the present invention provides a method of trans-browser login for a mobile terminal, which further correlates to the IMSI number of a SIM card to generate a cookie based on the first embodiment, specifically comprising the following steps:
S100. Creating a cookie folder in the memory module of the mobile terminal in advance;
S220. Generating a corresponding cookie by correlating addresses of different websites with a subscriber's registration name and password corresponding to the websites, the IMEI number of the mobile terminal, and the IMSI number of the mobile subscriber, and storing the cookie in the cookie folder;
S320. Sending the cookie to the server of a corresponding website, and the server of the website stores the IMEI number of the mobile terminal and the IMSI number of the mobile subscriber under the registration name corresponding to the subscriber;
S400. Any browser of the mobile terminal receives the website inputted by the subscriber and searches if a cookie of the website exists in the cookie folder, if yes, send the cookie to the server of the website; if no, return to Step S220;
S520. The server of the website reads the IMEI number of the mobile terminal and the IMSI number of the mobile subscriber in the cookie, looks for the corresponding registration name according to the IMEI number of the mobile terminal and the IMSI number of the mobile subscriber, and returns to the browser a webpage when the registration name is used to log in the website.

Specifically, the second preferred embodiment according to the present invention is based on the first preferred embodiment and further adds the IMSI number of a SIM card for the correlation and generation of a cookie, thereby further confirming the identity of a cell phone subscriber and improving the security of using a mobile terminal to log in a website. International Mobile Subscriber Identification Number (IMSI) is a mark to differentiate mobile subscribers, which is stored in a SIM card and may be used to differentiate valid information of mobile subscribers. Its total length does not exceed 15 digits, which are also 0 ∼ 9 numbers. The second preferred embodiment according to the present invention employs hard disk cookie and creates a cookie folder in the ROM partition of a cell phone in advance, and the cookie folder is used to store cookie information of all browsers. The cookie is generated by correlating addresses of different websites with a subscriber's registration name and password corresponding to the websites, the IMEI number of the mobile terminal and the IMSI number of the mobile subscriber. When a cell phone sends the subscriber information via a browser to a website server, it sends these correlated cookies to the website server at the same time, and the website server will store the IMEI number of the mobile terminal and the IMSI number of the mobile subscriber under the registration name corresponding to the subscriber. When the subscriber uses any browser of the cell phone to log in a website, the cell phone first searches in the cookie folder if a cookie of the website exists, if yes, it sends the cookie to the server of the website; if no, return to Step S200, i.e. re-generates a cookie corresponding to the website in the cookie folder, and namely re-correlate the address of the website with the subscriber's registration name and password corresponding to the website, the IMEI number of the mobile terminal and the IMSI number of the mobile subscriber. When the server of the website receives the cookie correlated to the IMEI number and the IMSI number of the cell phone, it reads the IMEI number and the IMSI number of the cell phone in the cookie, looks for the corresponding registration name according to the IMEI number and the IMSI number of the cell phone, and returns to the browser a webpage when the registration name is used to log in the website, such that the subscriber does not need to input subscriber name and password again to log in the website

The cookie generation flow in the present invention will be described below with a specific example.

First, create a folder with the name of Cookie in the ROM partition of a cell phone, and the cookie information of all browsers will be stored as sub-folders in this cookie folder. Subsequently, create a folder 1 in the Cookie folder to store the IMEI number and the IMSI number of the cell phone. IMEI is International Mobile Equipment Identity, which is used to identify the cell phone equipment identity; IMSI is International Mobile Subscriber Identification Number, which is used to identify the valid identity of a mobile subscriber. These two numbers will be used as the subscriber ID. The browser abc will be used as an example for the description. When a subscriber opens up the browser abc, the Cookie records the information inputted by the subscriber into the login box on the website, and creates a folder login_abc in the folder 1 to store the recorded subscriber information. Assume that the subscriber's registration name is XX, the password is 123456, the validity property expires=Saturday, 01-Mar-2014 00:00:01 GMT. At the same time when the login_abc Cookie is generated, IMEI and IMSI are added as properties into the property of login_abc, namely the following corresponding database table is developed, as shown in Table 1:

**Table 1**

| | |
|---|---|
| IMEI:111111111111111 | Login_abc |
| IMSI:222222222222222 | Website: www.soso.com |
| | Subscriber name: XX |
| | Password: 123456 |

In Table 1, the numbers of IMEI and IMSI are only examples, which are not limitations, and Website is a website. When the cell phone sends the subscriber information via HTTPS to the website server, it will simultaneously send IMEI and IMSI as a part of the subscriber information to the server, and the server of the website will store the subscriber's IMEI and IMSI under this subscriber name. At this moment, the information stored on the cell phone and the server, respectively, are listed in Table 2:

**Table 2**

| the information stored on the cell phone, i.e. the Cookie folder | the information stored on the server regarding the subscriber |
|---|---|
| IMEI:111111111111111 | Subscriber name: XX |
| IMSI:222222222222222 | Password: 123456 |
| | IMEI:111111111111111 |
| Web list | IMSI:222222222222222 |
| Website: www.soso.com | |

When the subscriber adds websites that have been logged in, the web list in the Cookie folder on the cell phone will increase, as shown in Table 3:

**Table 3**

| the information stored on the cell phone, i.e. the Cookie folder |
|---|
| IMEI:111111111111111 |
| IMSI:222222222222222 |
| |
| Web list |
| www.soso.com |
| www.haha.com |

When the subscriber uses any browser of the cell phone to log in a website, the cell phone first searches in the Web list in the Cookie folder if the website has been logged in, if there is a record of the website, then the browser will send the corresponding IMEI and IMSI as the properties of the Cookie to the server when the subscriber inputs the website, when the server receives the Cookie information, it will extract the IMEI and IMSI information contained therein, finds the subscriber name in the database corresponding to the IMEI and IMSI, sends the verification information through the browser, and returns the customized webpage, such as the webpage when the registration name is used to log in, to the browser.

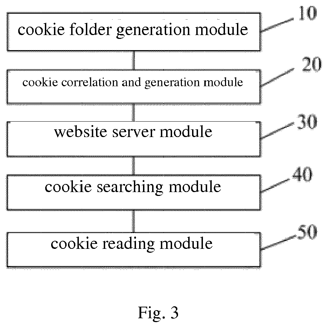

Based on the above method of trans-browser login for a mobile terminal, the present invention provides a device of trans-browser login for a mobile terminal, as shown in Fig.3, comprising:
A cookie folder generation module 10 for creating a cookie folder in the memory module of the mobile terminal, which is specifically described in Step S100.

A cookie correlation and generation module 20 for generating a corresponding cookie by correlating addresses of different websites with a subscriber's registration name and password corresponding to the websites, as well as the IMEI number of the mobile terminal, which is specifically described in Step S200.

A website server module 30 for receiving the cookie and storing the IMEI number of the mobile terminal under the registration name corresponding to the subscriber, which is specifically described in Step S300.

A cookie searching module 40 for searching if a cookie of the website inputted by the subscriber exists in the cookie folder, which is specifically described in Step S400.

A cookie reading module 50 for reading the IMEI number of the mobile terminal in the cookie, looking for the corresponding registration name according to the IMEI number of the mobile terminal, and returning to the browser a webpage when the registration name is used to log in the website, which is specifically described in Step S500.

Specifically, the cookie folder generation module 10 creates a cookie folder in the ROM of a cell phone, cookie information of all browsers will be stored in the cookie folder. Subsequently when the cell phone logs in a website, the cookie correlation and generation module 20 generates a corresponding cookie by correlating addresses of different websites with the subscriber's registration name and password corresponding to the websites, as well as the IMEI number of the mobile terminal, and stores the cookie in the cookie folder. At the same time when the cell phone logs in the website, the website server module 30 receives the cookie corresponding to the website, reads the IMEI number therein, and stores the IMEI number of the mobile terminal under the registration name corresponding to the subscriber. When the cookie folder is created and when the subscriber uses any browser of the cell phone to log in a website, the cookie searching module 40 in the cell phone first searches if a cookie of the website inputted by the subscriber exists in the cookie folder, if yes, it sends the cookie to the server of the website; if no, type in the registration name and password again, and then generate a cookie of the website through correlation again. When the server of the website receives the cookie, the cookie reading module 50 reads the IMEI number of the cell phone in the cookie, looks for the corresponding registration name according to the IMEI number of the cell phone in the server, and returns to the browser a webpage when the registration name is used to log in, such that the subscriber can directly access the webpage when webpage is logged in.

Moreover, the cookie correlation and generation module 20 is further used for generating a corresponding cookie by correlating addresses of different websites with a subscriber's registration name and password corresponding to the websites, the IMEI number of the mobile terminal, and the IMSI number of the mobile subscriber.

Moreover, the website server module 30 is further used for receiving the cookie and storing the IMEI number of the mobile terminal and the IMSI number of the mobile subscriber under the registration name corresponding to the subscriber.

Moreover, the cookie reading module 50 is further used for reading the IMEI number of the mobile terminal and the IMSI number of the mobile subscriber in the cookie, looking for the corresponding registration name according to the IMEI number of the mobile terminal and the IMSI number of the mobile subscriber, and returning to the browser a webpage when the registration name is used to log in the website.

In summary, the present invention discloses a method and device of trans-browser login for a mobile terminal. The method first creates a cookie folder in the memory module of the mobile terminal in advance; generates a corresponding cookie by correlating addresses of different websites with a subscriber's registration name and password corresponding to the websites, as well as the IMEI number of the mobile terminal, and stores the cookie in the cookie folder; sends the cookie to the server of a corresponding website, and stores the IMEI number of the mobile terminal under the registration name corresponding to the subscriber in the server of the website; any browser of the mobile terminal receives the website inputted by the subscriber and searches if a cookie of the website exists in the cookie folder, if yes, send the cookie to the server of the website; if no, generate a corresponding cookie through correlation again; the server of the website reads the IMEI number of the mobile terminal in the cookie, looks for the corresponding registration name according to the IMEI number of the mobile terminal, and returns to the browser a webpage when the registration name is used to log in the website, such that the subscriber does not need to type in the registration name and password again when using any browser of the same mobile terminal to log in the same website, thereby resulting in great convenience for subscribers, and the login can be performed even when the subscriber changes the SIM card. To improve the security of a subscriber's login to a website, furthermore, the IMEI number of the cell phone and the IMSI number of the SIM card are correlated to the registration name and password of the website to generate a cookie, such that the subscriber does not need to type in the registration name and password only when the same cell phone and the same SIM card are used to log in again, which further improves the security.

It should be understood that applications of the present invention are not limited to the above examples. To those skilled in the art, improvements or modifications may be made according to the above description, and all of these improvements or modifications shall be encompassed by the appended claims of the present invention.

## Claims

1. A method of trans-browser login for a mobile terminal comprising the following steps:
A. Creating a cookie folder in the memory module of the mobile terminal in advance (S100);
B. Generating, by the mobile terminal, a corresponding cookie by correlating addresses of different websites with a subscriber's registration name and password corresponding to the websites, as well as the IMEI number of the mobile terminal, and storing the cookie in the cookie folder (S200);
C. Sending the corresponding cookie to the server of a corresponding website, and storing, by the server of the website, the IMEI number of the mobile terminal under the registration name corresponding to the subscriber (S300);
D. Receiving, by any browser of the mobile terminal, the website inputted by the subscriber and searching if a corresponding cookie of the website exists in the cookie folder, if yes, send the corresponding cookie to the server of the website; if no, return to Step B (S400);
E. Reading, by the server of the website, the IMEI number of the mobile terminal in the corresponding cookie, looking for the corresponding registration name according to the IMEI number of the mobile terminal, and returning to the browser a webpage when the registration name is used to log in the website (S500).

2. The method of trans-browser login for a mobile terminal according to claim 1, wherein Step E comprises:
reading by the server of the website the IMEI number of the mobile terminal in the cookie, looking for the corresponding registration name according to the IMEI number of the mobile terminal, and verifying by the server of the website the cookie,
if the verification fails, inputting registration name and password again; if the verification succeeds, returning to the browser a webpage when the registration name is used to log in the website.

3. The method of trans-browser login for a mobile terminal according to claim 2, wherein during verification, verifying by the server of the website if the subscriber name corresponds to the password or if it has expired.

4. The method of trans-browser login for a mobile terminal according to any of the preceding claims, wherein said Step B further comprises:
B1. Correlating to the IMSI number of the mobile subscriber and generating a corresponding cookie, and storing the cookie in the cookie folder.

5. The method of trans-browser login for a mobile terminal according to any of the preceding claims, wherein said Step C further comprises:
C1. Storing by the server of the website the IMSI number of the mobile subscriber under the registration name corresponding to the subscriber.

6. The method of trans-browser login for a mobile terminal according to claim 5, wherein said Step E further comprises:
E1. Reading, by the server of the website, the IMSI number of the mobile subscriber in the cookie, looking for the corresponding registration name according to the IMEI number of the mobile terminal and the IMSI number of the mobile subscriber, and returning to the browser a webpage when the registration name is used to log in the website.

7. The method of trans-browser login for a mobile terminal any of the preceding claims, wherein said Step B further comprises:
B1. Correlating addresses of different websites with the corresponding valid time of the subscriber on said websites and generating a corresponding cookie, and storing the cookie in the cookie folder.

8. A system of trans-browser login for a mobile terminal, comprising:
- A cookie folder generation module (10) adapted to create a cookie folder in the memory module of the mobile terminal;
- A cookie correlation and generation module (20) adapted to generate a corresponding cookie by correlating addresses of different websites with a subscriber's registration name and password corresponding to the websites, as well as the IMEI number of the mobile terminal;
- A website server module (30) adapted to receive the cookie and to store the IMEI number of the mobile terminal under the registration name corresponding to the subscriber;
- A cookie searching module (40) adapted to search if a cookie of the website inputted by the subscriber exists in the cookie folder;
- A cookie reading module (50) adapted to read the IMEI number of the mobile terminal in the cookie, to look for the corresponding registration name according to the IMEI number of the mobile terminal, and to return to the browser a webpage when the registration name is used to log in the website.

9. The system of trans-browser login for a mobile terminal according to claim 8, wherein said cookie correlation and generation module is further adapted to correlate to the IMSI number of a mobile subscriber and generate a corresponding cookie.

10. The system of trans-browser login for a mobile terminal according to any of claims 8 or 9, wherein said website server module is further adapted to receive the cookie and store the IMSI number of the mobile subscriber under the registration name corresponding to the subscriber.

11. The system of trans-browser login for a mobile terminal according to any of the claims 8 to 10, wherein said cookie reading module is further adapted to read the IMSI number of the mobile subscriber in the cookie, look for the corresponding registration name according to the IMEI number of the mobile terminal and the IMSI number of the mobile subscriber, and return to the browser a webpage when the registration name is used to log in the website.

## Patentansprüche

1. Verfahren zum browserübergreifenden Einloggen für ein mobiles Endgerät, umfassend die folgenden Schritte:
A. Erstellen eines Cookie-Ordners in dem Speichermodul des mobilen Endgeräts im Voraus (S100);
B. Erzeugen eines entsprechenden Cookies durch das mobile Endgerät durch Korrelieren von Adressen verschiedener Webseiten mit einem Registrierungsnamen und -Passwort eines Teilnehmers, der/das den Webseiten entspricht, sowie mit der IMEI-Nummer des mobilen Endgeräts, und Speichern des Cookies in dem Cookie-Ordner (S200);
C. Senden des entsprechenden Cookies an den Server einer entsprechenden Webseite und Speichern der IMEI-Nummer des mobilen Endgeräts durch den Server der Webseite unter dem Registrierungsnamen, der dem Teilnehmer entspricht (S300);
D. Empfangen der Webseite, die durch den Teilnehmer eingegeben wurde, durch einen beliebigen Browser auf dem mobilen Endgerät, und Suchen, ob ein entsprechendes Cookie der Webseite in dem Cookie-Ordner vorhanden ist, und wenn ja, Senden des entsprechenden Cookies an den Server der Webseite; wenn nein, Zurückkehren zu Schritt B (S400);
E. Auslesen der IMEI-Nummer des mobilen Endgeräts in dem entsprechenden Cookie durch den Server der Webseite, Suchen nach dem entsprechenden Registrierungsnamen der IMEI-Nummer des mobilen Endgeräts entsprechend und Zurückgeben einer Webseite an den Browser, wenn der Registrierungsname verwendet wird, um sich auf der Webseite einzuloggen (S500).

2. Verfahren zum browserübergreifenden Einloggen für ein mobiles Endgerät nach Anspruch 1, wobei Schritt E umfasst:
Auslesen der IMEI-Nummer des mobilen Endgeräts in dem Cookie durch den Server der Webseite, Suchen nach dem entsprechenden Registrierungsnamen der IMEI-Nummer des mobilen Endgeräts und Verifizieren des Cookies durch den Server der Webseite, und bei Fehlschlagen der Verifizierung erneute Eingabe des Registrierungsnames und des Passworts; wenn die Verifizierung erfolgreich ist, Zurückgeben einer Webseite an den Browser, wenn der Registrierungsname verwendet wird, um sich auf der Webseite einzuloggen.

3. Verfahren zum browserübergreifenden Einloggen für ein mobiles Endgerät nach Anspruch 2, wobei während der Verifizierung durch den Server der Webseite verifiziert wird, ob der Teilnehmername dem Passwort entspricht oder ob es abgelaufen ist.

4. Verfahren zum browserübergreifenden Einloggen für ein mobiles Endgerät nach einem der vorhergehenden Ansprüche, wobei der Schritt B ferner umfasst:
B1. Korrelieren mit der IMSI-Nummer des mobilen Teilnehmers und Erzeugen eines entsprechenden Cookies, und Speichern des Cookies in dem Cookie-Ordner.

5. Verfahren zum browserübergreifenden Einloggen für ein mobiles Endgerät nach einem der vorhergehenden Ansprüche, wobei der Schritt C ferner umfasst:
C1. Speichern der IMSI-Nummer des mobilen Teilnehmers unter dem Registrierungsnamen, der dem Teilnehmer entspricht, durch den Server der Webseite.

6. Verfahren zum browserübergreifenden Einloggen für ein mobiles Endgerät nach Anspruch 5, wobei Schritt E ferner umfasst:
E1. Auslesen der IMSI-Nummer des mobilen Teilnehmers in dem Cookie durch den Server der Webseite, Suchen nach dem entsprechenden Registrierungsnamen der IMEI-Nummer des mobilen Endgeräts und der IMSI-Nummer des mobilen Teilnehmers und Zurückgeben einer Webseite an den Browser, wenn der Registrierungsname verwendet wird, um sich auf der Webseite einzuloggen.

7. Verfahren zum browserübergreifenden Einloggen für ein mobiles Endgerät nach einem der vorhergehenden Ansprüche, wobei der Schritt B ferner umfasst:
B1. Korrelieren der Adressen unterschiedlicher Webseiten mit der entsprechenden gültigen Zeit des Teilnehmers auf den Webseiten und Erzeugen eines entsprechenden Cookies und Speichern des Cookies in dem Cookie-Ordner.

8. System zum browserübergreifenden Einloggen für ein mobiles Endgerät, umfassend:
- Ein Modul zur Erzeugung eines Cookie-Ordners (10), angepasst, um einen Cookie-Ordner in dem Speichermodul des mobilen Endgeräts zu erzeugen;
- Ein Modul zur Korrelation und Erzeugung eines Cookies (20), angepasst, um ein entsprechendes Cookie durch Korrelation von Adressen verschiedener Webseiten mit einem Registrierungsnamen und Passwort eines Teilnehmers zu erzeugen, die den Webseiten sowie der IMEI-Nummer des mobilen Endgeräts entsprechen;
- Ein Webseitenservermodul (30), angepasst, um das Cookie zu empfangen und die IMEI-Nummer des mobilen Endgeräts unter dem Registrierungsnamen zu speichern, der dem Teilnehmer entspricht;
- Ein Modul zur Suche nach einem Cookie (40), angepasst, um zu suchen, ob ein Cookie der Webseite, die durch den Teilnehmer eingegeben wurde, in dem Cookie-Ordner existiert;
- Ein Modul zum Auslesen eines Cookies (50), angepasst, um die IMEI-Nummer des mobilen Endgeräts in dem Cookie zu lesen, um den entsprechenden Registrierungsnamen der IMEI-Nummer des mobilen Endgeräts zu suchen, und eine Webseite an den Browser zurückzugeben, wenn der Registrierungsname verwendet wird, um sich in der Webseite einzuloggen.

9. System zum browserübergreifenden Einloggen für ein mobiles Endgerät nach Anspruch 8,
wobei das Modul zur Korrelation und Erzeugung des Cookies ferner angepasst ist, um mit der IMSI-Nummer eines mobilen Teilnehmers zu korrelieren und ein entsprechendes Cookie zu erzeugen.

10. System zum browserübergreifenden Einloggen für ein mobiles Endgerät nach einem der Ansprüche 8 oder 9, wobei das Webseitenservermodul ferner angepasst ist, um das Cookie zu empfangen und die IMSI-Nummer des mobilen Teilnehmers unter dem Registrierungsnamen zu speichern, der dem Teilnehmer entspricht.

11. System zum browserübergreifenden Einloggen für ein mobiles Endgerät nach einem der Ansprüche 8 bis 10, wobei das Modul zum Auslesen des Cookies ferner angepasst ist, um die IMSI-Nummer des mobilen Teilnehmers in dem Cookie auszulesen, den entsprechenden Registrierungsnamen der IMEI-Nummer des mobilen Endgeräts und der IMSI-Nummer des mobilen Teilnehmers entsprechend zu suchen und eine Webseite an den Browser zurückzugeben, wenn der Registrierungsname verwendet wird, um sich bei der Webseite einzuloggen.

## Revendications

1. Procédé de connexion avec différents navigateurs pour un terminal mobile, comprenant les étapes suivantes :
A. créer un dossier de cookies dans le module de mémoire du terminal mobile à l'avance (S100) ;
B. générer, par le terminal mobile, un cookie correspondant en corrélant les adresses de différents sites Web à un nom d'enregistrement et à un mot de passe d'abonné correspondant aux sites Web, ainsi qu'à un numéro IIEM du terminal mobile, et stocker le cookie dans le dossier de cookies (S200) ;
C. envoyer le cookie correspondant au serveur d'un site Web correspondant, et stocker, par le serveur du site Web, le numéro IIEM du terminal mobile sous le nom d'enregistrement correspondant à l'abonné (S300) ;
D. recevoir, par un navigateur quelconque du terminal mobile, le site Web entré par l'abonné et rechercher si un cookie correspondant du site Web existe dans le dossier de cookies ; si tel est le cas, envoyer le cookie correspondant au serveur du site Web ; si tel n'est pas le cas, retourner à l'étape B (S400) ;
E. lire, par le serveur du site Web, le numéro IIEM du terminal mobile dans le cookie correspondant, chercher le nom d'enregistrement correspondant selon le numéro IIEM du terminal mobile, et retourner au navigateur une page Web lorsque le nom d'enregistrement est utilisé pour se connecter au site Web (S500).

2. Procédé de connexion avec différents navigateurs pour un terminal mobile selon la revendication 1, dans lequel l'étape E comprend :
lire, par le serveur du site Web, le numéro IIEM du terminal mobile dans le cookie, chercher le nom d'enregistrement correspondant selon le numéro IIEM du terminal mobile et vérifier, par le serveur du site Web, le cookie,
si la vérification échoue, entrer le nom d'enregistrement et le mot de passe à nouveau ; si la vérification réussit, retourner au navigateur une page Web lorsque le nom d'enregistrement est utilisé pour se connecter au site Web.

3. Procédé de connexion avec différents navigateurs pour un terminal mobile selon la revendication 2 dans lequel :
durant la vérification, vérifier, par le serveur du site Web, si le nom d'abonné correspond au mot de passe ou s'il a expiré.

4. Procédé de connexion avec différents navigateurs pour un terminal mobile selon l'une quelconque des revendications précédentes, dans lequel ladite étape B comprend en outre :
B1. corréler avec le numéro IMSI de l'abonné mobile et générer un cookie correspondant, et stocker le cookie dans le dossier de cookies.

5. Procédé de connexion avec différents navigateurs pour un terminal mobile selon l'une quelconque des revendications précédentes, dans lequel ladite étape C comprend en outre :
C1. stocker, par le serveur du site Web, le numéro IMSI de l'abonné mobile sous le nom d'enregistrement correspondant à l'abonné.

6. Procédé de connexion avec différents navigateurs pour un terminal mobile selon la revendication 5, dans lequel ladite étape E comprend en outre :
E1. lire, par le serveur du site Web, le numéro IMSI de l'abonné mobile dans le cookie, chercher le nom d'enregistrement correspondant selon le numéro IIEM du terminal mobile et le numéro IMSI de l'abonné mobile, et retourner au navigateur une page Web lorsque le nom d'enregistrement est utilisé pour se connecter au site Web.

7. Procédé de connexion avec différents navigateurs pour un terminal mobile selon l'une quelconque des revendications précédentes, dans lequel ladite étape B comprend en outre :
B1. corréler les adresses de différents sites Web au temps valide correspondant de l'abonné sur lesdits sites Web et générer un cookie correspondant, et stocker le cookie dans le dossier de cookies.

8. Système de connexion avec différents navigateurs pour un terminal mobile, comprenant :
- un module de génération de dossier de cookies (10) conçu pour créer un dossier de cookies dans le module de mémoire du terminal mobile ;
- un module de corrélation et de génération de cookie (20) conçu pour générer un cookie correspondant en corrélant les adresses de différents sites Web avec un nom d'enregistrement et un mot de passe d'abonné correspondant aux sites Web, ainsi qu'au numéro IIEM du terminal mobile ;
- un module serveur de sites Web (30) conçu pour recevoir le cookie et pour stocker le numéro IIEM du terminal mobile sous le nom d'enregistrement correspondant à l'abonné ;
- un module de recherche de cookie (40) conçu pour rechercher si un cookie du site Web entré par l'abonné existe dans le dossier de cookies ;
- un module de lecture de cookie (50) conçu pour lire le numéro IIEM du terminal mobile dans le cookie, pour chercher le nom d'enregistrement correspondant selon le numéro IIEM du terminal mobile, et pour retourner au navigateur une page Web lorsque le nom d'enregistrement est utilisé pour se connecter au site Web.

9. Système de connexion avec différents navigateurs pour un terminal mobile selon la revendication 8, dans lequel ledit module de corrélation et de génération de cookie est en outre conçu pour corréler avec le numéro IMSI d'un abonné mobile et générer un cookie correspondant.

10. Système de connexion avec différents navigateurs pour un terminal mobile selon l'une quelconque des revendications 8 ou 9, dans lequel ledit module serveur de sites Web est en outre conçu pour recevoir le cookie et stocker le numéro IMSI de l'abonné mobile sous le nom d'enregistrement correspondant à l'abonné.

11. Système de connexion avec différents navigateurs pour un terminal mobile selon l'une quelconque des revendications 8 à 10, dans lequel ledit module de lecture de cookie est en outre conçu pour lire le numéro IMSI de l'abonné mobile dans le cookie, chercher le nom d'enregistrement correspondant selon le numéro IIEM du terminal mobile et le numéro IMSI de l'abonné mobile, et retourner au navigateur une page Web lorsque le nom d'enregistrement est utilisé pour se connecter au site Web.
